(19) Europäisches Patentamt / European Patent Office / Office européen des brevets

(11) **EP 3 953 094 B1**

(12) **EUROPÄISCHE PATENTSCHRIFT**

(45) Veröffentlichungstag und Bekanntmachung des Hinweises auf die Patenterteilung:
**31.05.2023   Patentblatt 2023/22**

(21) Anmeldenummer: **20716819.6**

(22) Anmeldetag: **09.04.2020**

(51) Internationale Patentklassifikation (IPC):
**B23K 9/095** (2006.01)     **B23K 9/10** (2006.01)

(52) Gemeinsame Patentklassifikation (CPC):
**B23K 9/1012; B23K 9/0956; B23K 9/1075**

(86) Internationale Anmeldenummer:
**PCT/EP2020/060166**

(87) Internationale Veröffentlichungsnummer:
**WO 2020/208144 (15.10.2020 Gazette 2020/42)**

(54) **SCHWEISSVERFAHREN UND -ANORDNUNG MIT MESSWERTSYNCHRONISATION**

WELDING METHOD AND ARRANGEMENT WITH MEASUREMENT SYNCHRONISATION

PROCÉDÉ ET ARRANGEMENT DE SOUDAGE À SYNCHRONISATION DE VALEUR MESURÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.04.2019   EP 19168536**

(43) Veröffentlichungstag der Anmeldung:
**16.02.2022   Patentblatt 2022/07**

(73) Patentinhaber: **FRONIUS INTERNATIONAL GmbH 4643 Pettenbach (AT)**

(72) Erfinder:
• **SÖLLINGER, Dominik**
  **4643 Pettenbach (AT)**
• **MAYER, Manuel**
  **4643 Pettenbach (AT)**

(74) Vertreter: **Patentanwälte Pinter & Weiss OG Prinz-Eugen-Straße 70 1040 Wien (AT)**

(56) Entgegenhaltungen:
**EP-A1- 0 787 555     EP-B1- 0 787 555
US-A- 4 322 602     US-A1- 2015 343 549**

**Beschreibung**

Die Erfindung betrifft ein Schweißverfahren, bei dem mit zumindest einem Schweißgerät ein Schweißprozess durchgeführt wird, wobei das zumindest eine Schweißgerät in einem Schweißstromkreis eine elektrische Messgröße zur Steuerung des Schweißprozesses des Schweißgeräts erfasst, wobei während des mit dem Schweißgerät durchgeführten Schweißprozesses von zumindest einem anderen elektrischen Gerät, in dem in einem Geräte-Stromkreis zumindest zu einem Zeitpunkt ein zeitlich veränderlicher Geräte-Strom fließt, eine Synchronisationsinformation an das zumindest eine Schweißgerät gesendet wird. Die Erfindung betrifft weiters eine Schweißanordnung mit zumindest einem Schweißgerät zum Durchführen eines Schweißprozesses, wobei das zumindest eine Schweißgerät vorgesehen ist, in seinem Schweißstromkreis eine elektrische Messgröße zur Steuerung des Schweißprozesses zu erfassen, wobei zumindest ein anderes elektrisches Gerät vorgesehen ist, in dem in einem Geräte-Stromkreis zumindest zu einem Zeitpunkt ein zeitlich veränderlicher Geräte-Strom fließt, wobei das zumindest eine elektrische Gerät mit dem zumindest einen Schweißgerät mittels einer Kommunikationsverbindung verbunden ist, wobei das zumindest eine elektrische Gerät vorgesehen ist, eine Synchronisationsinformation an das zumindest eine Schweißgerät zu senden.

Beim Schweißen mit abschmelzenden Elektroden (z.B. MIG/MAG-Schweißen, Unterpulverschweißen) oder nicht abschmelzenden Elektroden (z.B. WIG-Schweißen) wird oftmals in unmittelbarer Nähe zu einem oder mehreren anderen elektrischen Geräten geschweißt. Beispielsweise könnte als elektrisches Gerät ein weiteres Schweißgerät vorgesehen sein, sodass mit mehreren voneinander unabhängigen Schweißgeräten parallel geschweißt wird, beispielsweise um die Schweißleistung zu erhöhen. Die mehreren Schweißgeräte und/oder anderen elektrischen Geräte können dazu direkt nebeneinander oder in unmittelbarer Nähe zueinander angeordnet sein, beispielsweise in einem gemeinsamen Raum wie z.B. einer Schweißzelle. Als elektrisches Gerät ist aber oftmals auch ein Schweißroboter zur Führung eines Schweißbrenners, eine Punktschweißvorrichtung, etc. in der Umgebung des Schweißgeräts angeordnet.

Jedes Schweißgerät weist in der Regel eine eigene Schweißstromquelle sowie eine Masseleitung und einen Schweißbrenner mit einer Schweißelektrode auf, die im Betrieb einen Schweißstromkreis über ein (elektrisch leitendes) Werkstück ausbilden. Anstatt getrennter Masseleitungen für jedes Schweißgerät wird oftmals auch eine gemeinsame Masseleitung verwendet, beispielsweise eine sogenannte Stromschiene, die als gemeinsames elektrisches Potential dient. Andere elektrische Geräte, wie z.B. ein Schweißroboter, weisen wiederum jeweils einen eigenen Geräte-Stromkreis auf. Beispielsweise könnte für mehrere Antriebsmotoren der verfügbaren Achsen des Schweißroboters jeweils ein Geräte-Stromkreis vorgesehen sein oder es könnte jeweils ein Geräte-Stromkreis für andere elektrische Geräte, wie z.B. eine Punktschweißzange eines Punktschweißgeräts vorgesehen sein.

Zum Schweißen wird mit jedem Schweißgerät zwischen der Elektrode des Schweißbrenners und dem Werkstück in bekannter Weise ein Lichtbogen gezündet. Durch den Lichtbogen wird einerseits das Werkstück teilweise aufgeschmolzen, wodurch ein sogenanntes Schmelzbad entsteht. Andererseits wird durch den Lichtbogen ein dem Schmelzbad zugeführter Zusatzstoff abgeschmolzen, der entweder die Elektrode selbst (MIG/MAG) oder ein separat zugeführter Zusatzstoff (WIG) sein kann.

Meist wird auch ein sogenanntes Schutzgas verwendet, um das Schmelzbad von der Umgebungsluft abzuschirmen. Oftmals ist ein gemeinsames Schlauchpaket vorgesehen, in dem das abschmelzende Elektrodenmaterial z.B. in Form eines Schweißdrahts gemeinsam mit einer Schutzgasleitung dem Schweißbrenner zugeführt wird. Im Schlauchpaket können auch noch weitere Leitungen vorgesehen, beispielsweise ein Vor- und Rücklauf für ein Kühlmedium für den Schweißbrenner, oder Steuerleitungen.

Dabei kann mit mehreren Schweißgeräten zeitgleich an demselben Werkstück geschweißt werden oder auch an separaten Werkstücken. Bekannt sind auch sogenannte Mehrfach-Schweißprozesse, bei welchen mehrere Schweißprozesse gleichzeitig an einem Werkstück ausgeführt werden. Dabei können auch zwei (oder mehr) Schweißdrähte einem gemeinsamen Schmelzbad zugeführt werden.

Um einen definierten Schweißprozess durchzuführen, werden in der Regel bestimmte Schweißparameter am jeweiligen Schweißgerät eingestellt, beispielsweise von einer geeigneten Steuerungseinheit des Schweißgeräts und/oder von einem Benutzer. Solche Schweißparameter sind z.B. eine Schweißspannung, ein Schweißstrom und eine Schweißdrahtvorschubgeschwindigkeit der abschmelzenden Elektrode (MIG/MAG) oder des Zusatzstoffs (WIG), wobei für verschiedene Schweißprozesse verschiedene Schweißparameter eingestellt werden können. Das Schweißgerät erfasst in der Regel auch eine elektrische Messgröße während der Durchführung des Schweißprozesses, beispielsweise die Schweißspannung, den Schweißstrom, oder einen elektrischen Widerstand des Schweißstromkreises.

Die erfasste Messgröße wird vom Schweißgerät verarbeitet, um den Schweißprozess zu überwachen, zu steuern bzw. zu regeln. Bekannte Schweißprozesse, die mit einem Schweißgerät durchgeführten werden, sind beispielsweise ein Impulsschweißprozess, ein Kurzlichtbogenschweißprozess oder ein Kurzlichtbogenschweißprozess mit reversierende Drahtelektrode (z.B. ein sogenannter Kalt-Metall-Transfer-Schweißprozess), wobei es natürlich auch noch weitere Schweißprozesse wie z.B. Sprühlichtbogen-Schweißprozess, Mixprozesse, Schweißprozess mit rotierendem Lichtbogen, etc. gibt. Bei den genannten Schweißprozessen kann eine definierte zyklische Schweißstromänderung im jeweiligen Schweißstromkreis erfolgen, welche zu einer Tropfenablöse der abschmelzenden Elektrode oder des Zusatzstoffs führt.

Oftmals kann es vorkommen, dass die Schweißgeräte relativ zueinander so im Raum positioniert sind, dass sich deren Schweißstromkreise teilweise kreuzen und/oder teilweise parallel verlaufen (wobei sich das natürlich auf die elektrischen Leitungen der Schweißstromkreise bezieht). Es kann auch vorkommen, dass sich der Schweißstromkreis eines Schweißgeräts mit dem Geräte-Stromkreis eines anderen elektrischen Geräts kreuzt oder parallel mit diesem verläuft, beispielsweise dem Geräte-Stromkreis eines Schweißroboters. Beispielsweise können die Masseleitungen einzelner nebeneinander angeordneter Schweißgeräte aus praktischen Gründen im Wesentlichen parallel zwischen den Schweißgeräten und einem Schweiß-Arbeitsplatz verlegt werden. Die Schlauchpakete, die zu den Schweißbrennern führen können sich manchmal auch kreuzen, beispielsweise wenn auf mehreren Seiten eines Werkstücks geschweißt wird, oder parallel geführt sein. Das kann trotz einer elektrischen Isolierung der stromführenden Leitungen dazu führen, dass sich die Schweißstromkreise der Schweißgeräte gegenseitig elektromagnetisch beeinflussen.

Insbesondere bei den oben genannten Schweißprozessen mit veränderlichen Schweißströmen während eines Schweißzyklus kann dies zu Problemen führen. Bei einem Impulsschweißprozess ändert sich der Schweißstrom beispielsweise in periodisch wiederholten Schweißzyklen zwischen einem Grundstrom und einem Impulsstrom, wobei steile Stromanstiegsflanken und Stromabstiegsflanken vorgesehen sein können. Der zeitlich veränderliche Schweißstrom in einem ersten Schweißstromkreis erzeugt ein zeitlich veränderliches magnetisches Feld um die Schweißstromzuleitung zum Schweißbrenner aber auch über die rückführende Masseleitung. Dieses magnetische Feld kann wiederum eine elektrische Spannung in einem zweiten (oder mehreren) Schweißstromkreis induzieren, insbesondere, wenn der zweite Schweißstromkreis in der Nähe des ersten Schweißstromkreises angeordnet ist.

Diese induzierte Spannung kann dazu führen, dass die im zweiten Schweißstromkreis erfasste Messgröße, insbesondere eine Schweißspannung, fehlerhaft erfasst wird, weil durch die induktive Einkopplung Spannungsspitzen auftreten können, die die Messung beeinflussen. Beispielsweise kann bei Erfassung der Schweißspannung aufgrund der induzierten Spannung ein verfälschter Wert gemessen werden. Der falsche Messwert kann sich dann nachteilig auf die Regelung bzw. Steuerung des jeweiligen Schweißprozesses auswirken, insbesondere kann dies zu einem instabilen Schweißprozess führen. Bei zwei (oder mehr) gleichzeitig durchgeführten Schweißprozessen mit jeweils impulsförmigen Schweißströmen, können sich die zwei (oder mehr) Schweißprozesse auch gegenseitig stören und die Messung beeinflussen.

Wenn mehrere Schweißgeräte und/oder elektrische Geräte eine gemeinsame Masseleitung, z.B. eine Stromschiene nutzen, kann dies unter Umständen zu Schwankungen im elektrischen Potential der Stromschiene führen. Die in der Regel veränderlichen Schweißströme in den Schweißstromkreisen und/oder die Geräte-Ströme in den Geräte-Stromkreisen können einen Spannungsabfall an der gemeinsamen Stromschiene verursachen, da diese vereinfacht einen ohmschen Widerstand darstellt. Ein anderes Schweißgerät erfasst dadurch unter Umständen einen ungenauen oder falschen Messwert, beispielsweise eine Spannung oder einen Widerstand, in seinem Schweißstromkreis, was sich negativ auf den Schweißprozess auswirken kann.

EP 0 787 555 A1 offenbart ein Verfahren und eine Steuerungsvorrichtung zum Steuern eines Impulsschweißprozesses. In der Steuerungsvorrichtung ist ein "droplet separation detector" zur Erkennung der Tropfenablöse auf Basis der Schweißspannung angeordnet, der ein Signal an einen "output compensator" übergibt. Bei einem Kurzschluss steigt die Schweißspannung, was zu einer falschen Detektion der Tropfenablösung führen kann. Um dies zu vermeiden ignoriert der "output compensator" das Signal des "droplet detectors", wenn ein Kurzschluss auftritt.

US 2015/343549 A1 (offenbarend alle Schritte und Merkmale des Oberbegriffes der Ansprüche 1 und 11) beschreibt ein Mehrfachschweißverfahren mit zwei Schweißgeräten zur Durchführung jeweils eines Schweißprozesses an einem Werkstück, wobei die Schweißprozesse jeweils von einer eigenen Steuerungseinheit gesteuert werden. Die Steuerungseinheiten der beiden Schweißgeräte sind über eine Synchronisierungs-Steuerungseinheit verbunden, welche die Schweißprozesse synchronisiert. Die Synchronisierungs-Steuerungseinheit synchronisiert die zeitlichen Verläufe der Schweißströme der beiden Schweißprozesse hinsichtlich einer Phasenverschiebung.

US 4,322,602 offenbart eine einzige Stromquelle zur Durchführung eines Unterpulver-Schweißprozesses, wobei in einer Spannungsregelung in bekannter Weise ein Ist-Wert der zu regelnden Spannung erfasst wird. Ein weiteres elektrisches Gerät ist nicht offenbart. Es wird erwähnt, dass das Zeitverhalten des Reglers so festgelegt wird, dass kurze, spontane Störungen ignoriert werden.

Demgemäß besteht die Aufgabe der Erfindung darin, ein Schweißverfahren bei dem mit zumindest einem Schweißgerät geschweißt wird sowie eine Schweißanordnung mit zumindest einem Schweißgerät bereitzustellen, die einen stabileren Schweißprozess gewährleisten.

Die Aufgabe wird erfindungsgemäß dadurch gelöst, dass das zumindest eine Schweißgerät die erhaltene Synchronisationsinformation dazu verwendet, um die zu dem Zeitpunkt erfassten Messwerte der Messgröße zu ignorieren, siehe Ansprüche 1 und 11. Vorzugsweise enthält die Synchronisationsinformation dabei eine Information über eine, die Messgröße des Schweißgeräts beeinflussende zeitliche Geräte-Stromänderung im Geräte-Stromkreis und das Schweißgerät verwendet die Synchronisationsinformation, um die während der, die Messgröße beeinflussenden Geräte-Stromänderung erfassten Messwerte der Messgröße zu ignorieren. Dadurch wird gewährleistet, dass die Messgröße, die zur Regelung des Schweißprozesses verwendet wird, nicht von einem anderen elektrischen Gerät negativ beeinflusst wird, wodurch ein stabilerer Schweißprozess geschaffen wird, wobei unter dem Ignorieren der Messwerte natürlich auch eine Unterbrechung der Messwerterfassung zu verstehen ist.

Als elektrisches Gerät wird vorzugsweise eine elektrische Komponente eines Schweißsystems, insbesondere eine Punktschweißvorrichtung oder ein Schweißroboter verwendet. Dadurch können gängige Geräte in der Umgebung des Schweißgeräts berücksichtigt werden, welche den Schweißprozess nachteilig beeinflussen können.

Vorteilhafterweise wird als elektrisches Gerät ein Schweißgerät verwendet, das einen Schweißprozess mit einem zeitlich veränderlichen Schweißstrom durchführt, wobei das Schweißgerät, das den Schweißprozess mit dem zeitlich veränderlichen Schweißstrom durchführt, eine Synchronisationsinformation über eine, die Messgröße des jeweils anderen Schweißgeräts beeinflussende Schweißstromänderung des durchgeführten Schweißprozesses an das Schweißgerät sendet, das die Messgröße erfasst und dass das Schweißgerät, das die Messgröße erfasst, die erhaltene Synchronisationsinformation verwendet, um die während der, die Messgröße beeinflussenden Schweißstromänderung erfassten Messwerte der Messgröße zu ignorieren. Dadurch wird gewährleistet, dass die Messgröße nicht von einem anderen Schweißgerät negativ beeinflusst wird, wodurch ein stabilerer Schweißprozess geschaffen wird, auch wenn in der Umgebung mit einem weiteren Schweißgerät gearbeitet wird.

Vorteilhafterweise wird mit zumindest zwei Schweißgeräten jeweils ein Schweißprozess mit einem zeitlich veränderlichen Schweißstrom durchgeführt, wobei jedes der zumindest zwei Schweißgeräte jeweils eine Messgröße in seinem Schweißstromkreis erfasst, wobei die Schweißgeräte wechselseitig eine Synchronisationsinformation über, die Messgröße des jeweils anderen Schweißgeräts beeinflussende Schweißstromänderung des jeweilig durchgeführten Schweißprozesses austauschen und die Schweißgeräte die erhaltene Synchronisationsinformation des jeweils anderen Schweißgeräts verwenden, um die während der Schweißstromänderungen erfassten Messwerte der Messgröße zu ignorieren. Dadurch wird gewährleistet, dass sich zwei oder mehrere Schweißgeräte nicht gegenseitig negativ beeinflussen, wodurch beispielsweise mit zwei oder mehreren Schweißgeräten stabilere Schweißprozesse durchgeführt werden können.

Vorzugsweise wird als Schweißprozess mit zeitlich veränderlichem Schweißstrom ein Impulsschweißprozess, ein Kurzlichtbogenschweißprozess, ein Sprühlichtbogen-Schweißprozess oder ein Schweißprozess mit reversierendem Schweißdrahtvorschub verwendet. Dadurch kann das Verfahren bei den gängigsten Schweißprozessen verwendet werden.

Die gesendete Synchronisationsinformation enthält vorteilhafterweise eine zeitliche Information über einen Beginn und ein Ende der Geräte-Stromänderung und/oder Schweißstromänderung, wobei die vom Schweißgerät, welches die Synchronisationsinformation erhält, zwischen dem Beginn und dem Ende der Geräte-Stromänderung und/oder Schweißstromänderung erfassten Messwerte der Messgröße ignoriert werden. Dadurch wird eine einfache Möglichkeit einer Synchronisationsinformation geschaffen.

Es ist vorteilhaft, wenn die Synchronisationsinformation um eine bestimmte Vorlaufzeit vor der Geräte-Stromänderung und/oder Schweißstromänderung gesendet wird. Dadurch kann die Synchronisationsinformation bei bekannten Stromverläufen bereits frühzeitig gesendet werden, wodurch z.B. etwaige Verzögerungen in der Datenübertragung kompensiert werden können.

Als Messgröße wird vorteilhafterweise eine Schweißspannung und/oder ein Schweißstrom und/oder ein elektrischer Schweißwiderstand erfasst, da diese elektrischen Größen gängige Messwerte zur Regelung eines Schweißprozesses sind.

Es ist weiters vorteilhaft, wenn zumindest ein Schweißgerät die erfasste Messgröße zur weiteren Verwendung an ein externes Gerät übermittelt und dass das externe Gerät die erfasste Messgröße verwendet, um einen Prozess des externen Geräts zu steuern oder den Schweißprozess des Schweißgeräts zu analysieren, wobei als externes Gerät vorzugsweise ein Schweißroboter vorgesehen wird, der einen Schweißbrenner des Schweißgeräts führt, um eine Schweißnaht zu erzeugen und der Schweißroboter die erhaltene Messgröße verwendet, um eine Bewegung des Schweißbrenners zu steuern. Dadurch kann die korrekt erfasste Messgröße praktischerweise für weitere Zwecke herangezogen werden.

Die gegenständliche Erfindung wird nachfolgend unter Bezugnahme auf die Figuren 1 bis 2 näher erläutert, die beispielhaft, schematisch und nicht einschränkend vorteilhafte Ausgestaltungen der Erfindung zeigen. Dabei zeigt

  Fig.1 eine Schweißanordnung mit zwei Schweißgeräten und einem Werkstück,

  Fig.2 einen zeitlichen Verlauf der Schweißströme zweier Schweißstromkreise, einen zeitlichen Verlauf einer Synchronisationsinformation sowie einen zeitlichen Verlauf einer erfassten Messgröße.

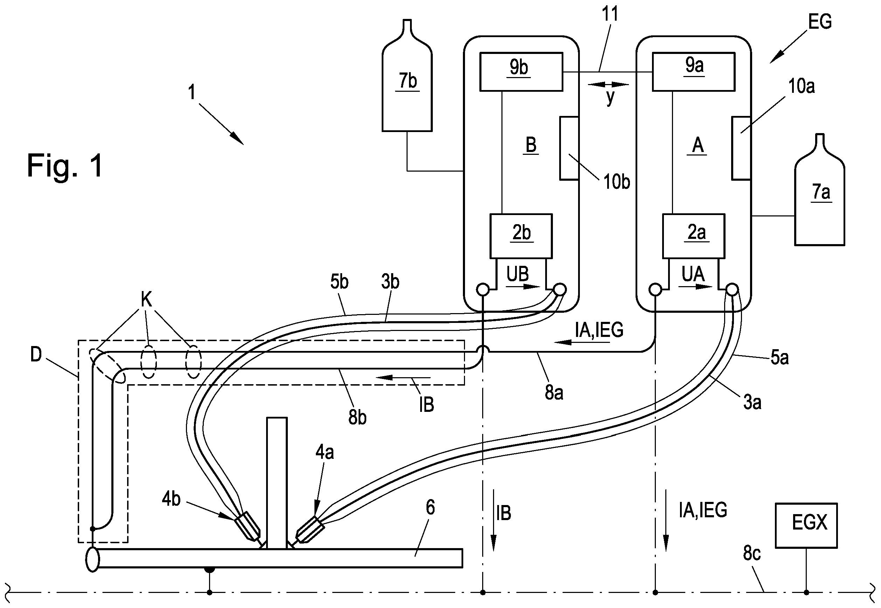

In Fig. 1 ist beispielhaft eine Schweißanordnung 1 mit zwei voneinander unabhängigen Schweißgeräten A, B vereinfacht dargestellt. Die Schweißgeräte A, B sind hier als MIG/MAG-Schweißgeräte mit abschmelzender Elektrode ausgestaltet, es könnten aber natürlich auch ein oder mehrere WIG-Schweißgeräte mit nicht abschmelzender Elektrode verwendet werden oder auch ein Laser-Hybrid-Schweißgerät. Im gezeigten Beispiel wird mit beiden Schweißgeräten A, B zeitgleich jeweils ein Schweißprozess an einem gemeinsamen Werkstück 6 durchgeführt. Natürlich könnten auch mehr als die dargestellten zwei Schweißgeräte A, B vorgesehen sein. Es könnte aber allgemein auch nur ein Schweißgerät B vorgesehen sein und statt des zweiten Schweißgeräts A könnte ein anderes elektrisches Gerät EG, wie z.B. eine elektrische Komponente eines Schweißsystems, beispielsweise ein Schweißrobotervorgesehen sein. Für das Verständnis der Erfindung ist die Anordnung von zwei Schweißgeräten A, B jedoch ausreichend. Die Schweißgeräte A, B müssen auch nicht zwingend als separate Einheiten ausgeführt sein, sondern es wäre auch denkbar, dass die zwei (oder mehrere) Schweißgeräte A, B beispielsweise in einem gemeinsamen Gehäuse angeordnet sind. Das ändert aber nichts daran, dass jedes Schweißgerät A, B für sich einen eigenen Schweißstromkreis zur Durchführung eines Schweißprozesses ausbildet.

Die Schweißgeräte A, B weisen bekanntermaßen jeweils eine Schweißstromquelle 2a, 2b, eine (nicht dargestellte) Schweißdrahtvorschubeinheit und einen Schweißbrenner 4a, 4b auf (MIG/MAG-Schweißgeräte). Bei anderen Schweißverfahren, wie z.B. dem Elektrodenschweißen, bei dem eine Stabelektrode per Hand einer Schweißstelle zugeführt wird, kann die Schweißdrahtvorschubeinheit natürlich entfallen. Die Schweißstromquellen 2a, 2b stellen jeweils die benötigte Schweißspannung UA, UB zur Verfügung, die jeweils an einen Schweißdraht 3a, 3b als abschmelzende Elektrode angelegt wird (oder an eine nicht abschmelzende Elektrode im Falle eines Schweißverfahrens mit abschmelzender Elektrode wie z.B. WIG-Schweißen). Der Schweißdraht 3a, 3b wird dem jeweiligen Schweißbrenner 4a, 4b mittels der Schweißdrahtvorschubeinheit mit einer bestimmten Schweißdrahtvorschubgeschwindigkeit zugeführt.

Die Zuführung kann beispielsweise innerhalb eines Schlauchpakets 5a, 5b oder auch außerhalb davon erfolgen. Die Schweißdrahtvorschubeinheit kann jeweils im Schweißgerät A, B integriert sein, kann aber auch eine separate Einheit sein. Zur Durchführung eines Schweißprozesses wird ein Lichtbogen zwischen dem Schweißdraht 3a, 3b und dem Werkstück 6 gezündet. Durch den Lichtbogen wird einerseits das Material des Werkstücks 6 lokal aufgeschmolzen und ein sogenanntes Schmelzbad erzeugt. Andererseits wird der Schweißdraht 3a, 3b mittels einer bestimmten Schweißdrahtvorschubgeschwindigkeit dem Schmelzbad zugeführt und vom Lichtbogen abgeschmolzen, um Material des Schweißzusatzstoffes auf das Werkstück 6 aufzutragen. Bei Bewegung des Schweißbrenners 4a, 4b relativ zum Werkstück 6 kann dadurch eine Schweißnaht ausgebildet werden.

Im jeweiligen Schlauchpaket 5a, 5b können gegebenenfalls auch weitere Leitungen zwischen dem Schweißgerät A, B und dem jeweiligen Schweißbrenner 4a, 4b (beispielsweise eine Steuerleitung oder eine Kühlmittelleitung) vorgesehen sein. Oftmals wird auch ein Schutzgas verwendet, um das Schmelzbad vor der Umgebungsluft, insbesondere dem darin enthaltenen Sauerstoff abzuschirmen, um eine Oxidation zu vermeiden. Dabei kommen in der Regel inerte Gase (z.B. Argon) oder aktive Gase (z.B. $CO_2$) zum Einsatz, welche dem Schweißbrenner 4a, 4b ebenfalls über das Schlauchpaket 5a, 5b zugeführt werden können. Die Schutzgase sind üblicherweise in separaten (Druck-)Behältern 7a, 7b gelagert, welche z.B. über geeignete Leitungen den Schweißgeräten A, B (oder direkt dem Schweißbrenner 4a, 4b) zugeführt werden können. Bei Verwendung des gleichen Schutzgases könnte auch ein gemeinsamer Behälter für beide (alle) Schweißgeräte A, B vorgesehen sein. Natürlich kann ggf. auch ohne Schutzgas geschweißt werden. Das Schlauchpaket 5a, 5b kann an den Schweißbrenner 4a, 4b und am Schweißgerät A, B z.B. über geeignete Kupplungen angekoppelt werden.

Um jeweils einen Schweißstromkreis der Schweißgeräte A, B auszubilden, sind die Schweißstromquellen 2a, 2b im gezeigten Beispiel jeweils mit einer Masseleitung 8a, 8b mit dem Werkstück 6 verbunden. Ein Pol der Schweißstromquelle 2a, 2b, üblicherweise der Pluspol, ist mit der Masseleitung 8a, 8b verbunden, der andere Pol der Schweißstromquelle 2a, 2b, üblicherweise der Minuspol, ist mit der Schweißelektrode verbunden (oder umgekehrt). Damit bildet sich für jeden Schweißprozess über den Lichtbogen und das Werkstück 6 ein Schweißstromkreis aus. Natürlich könnte mit den Schweißgeräten A, B auch jeweils auf einem eigenen Werkstück 6 geschweißt werden. Die entsprechende Masseleitung 8a, 8b muss dann natürlich mit dem jeweiligen Werkstück 6 verbunden sein. Im gezeigten Beispiel in Fig. 1 sind die beiden Masseleitungen 8a, 8b über einen großen Bereich D ihrer Länge im Wesentlichen direkt nebeneinander parallel verlegt. Diese Nähe der elektrischen Masseleitungen 8a, 8b zueinander kann trotz einer elektrisch nicht leitenden Isolierung dazu führen, dass sich die Masseleitungen 8a, 8b gegenseitig elektromagnetisch beeinflussen, wie eingangs erwähnt wurde. In Fig. 1 ist die elektromagnetische Kopplung schematisch durch magnetische Kreise K angedeutet. In gleicher Weise können sich aber auch die Schweißstromleitungen zu den Schweißbrennern 4a, 4b teilweise kreuzen oder parallel laufen, was ebenso zu einer elektromagnetischen Kopplung führen kann.

Wenn statt des Schweißgeräts A beispielsweise ein anderes elektrisches Gerät EG, wie z.B. ein (nicht dargestellter) Schweißroboter vorgesehen ist, kann sich eine elektromagnetische Kopplung zwischen der Masseleitung 8b des Schweißgeräts B und einer elektrischen Anschlussleitung des elektrischen Geräts EG ergeben, beispielsweise wenn sich die Masseleitung 8b und die elektrische Anschlussleitung des elektrischen Geräts EG kreuzen oder in unmittelbarer Nähe zueinander befinden.

In einer alternativen Ausgestaltung könnte statt der beiden separaten Masseleitungen 8a, 8b auch eine gemeinsame Masseleitung 8c verwendet werden, wie in Fig.1 strichpunktiert angedeutet ist. Beispielsweise kann in vorteilhafter Weise eine sogenannte Stromschiene als gemeinsames elektrisches Potential für mehrere elektrische Geräte genutzt werden. Neben den dargestellten Schweißgeräten A, B könnten also auch noch weitere elektrische Geräte EGX an der Stromschiene 8c angeschlossen werden, z.B. ein Schweißroboter, insbesondere dessen elektrische Antriebe. Eine gemeinsam genutzte Masseleitung 8c bildet damit vereinfacht einen ohmschen Widerstand aus.

Insbesondere, wenn mit einem (oder mit beiden) Schweißgeräten A, B ein Schweißprozess mit zeitlich veränderlichem Schweißstrom IA, IB durchgeführt wird, kann es durch eine in der jeweils anderen Masseleitung 8a, 8b induzierten Spannung zu einem instabilen Schweißprozess aufgrund verfälschter Messgrößen führen, insbesondere bei Messung der Schweißspannung UA, UB, wie nachfolgend noch im Detail erläutert wird. Wenn statt des zweiten Schweißgeräts A ein anderes elektrisches Gerät EG vorgesehen ist (oder zusätzlich) gilt das gleiche, wenn in dessen Geräte-Stromkreis ein zeitlich veränderlicher Geräte-Strom IEG fließt, der die erfasste Messgröße des Schweißgeräts B beeinflusst. Unter solchen zeitlich veränderlichen Geräte-Strömen IEG sind insbesondere solche Stromänderungen zu verstehen, welche beispielsweise die Schweißspannung UB als elektrische Messgröße im Bereich von 0,5-20V verändern, insbesondere zwischen 3-8V.

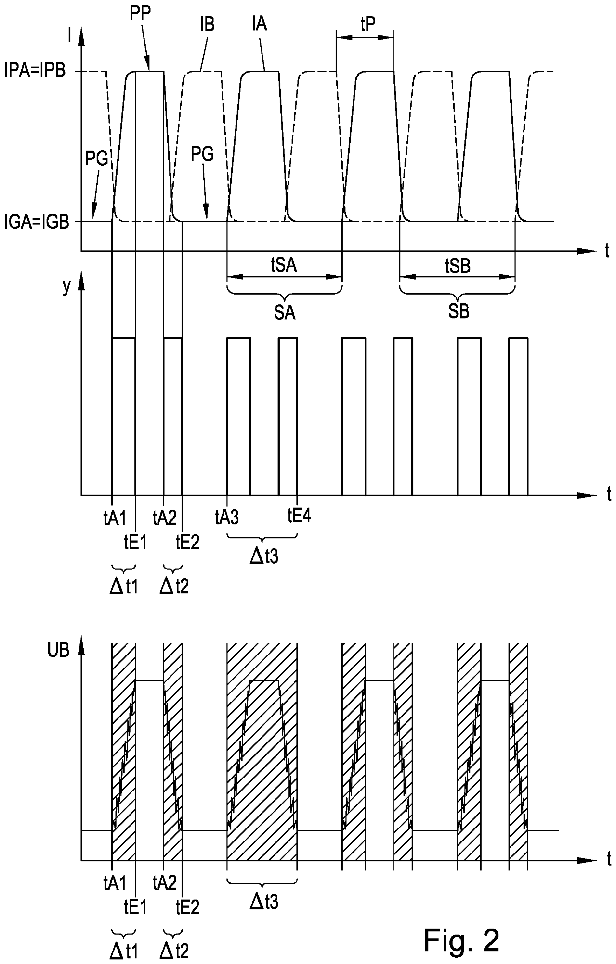

Unter Schweißprozessen mit zeitlich veränderlichem Schweißstrom sind im Rahmen der Erfindung insbesondere solche Schweißprozesse zu verstehen, bei denen sich Schweißzyklen mit unterschiedlich hohen Schweißströmen I periodisch abwechseln, wobei die Schweißstromänderung hinreichend groß ist und hinreichend schnell erfolgt, um eine Spannung in einem benachbarten Schweißstromkreis zu induzieren, um eine Messwerterfassung zu beeinflussen. In der Regel variieren die Schweißströme I im Bereich zwischen 3A-1500A, insbesondere zwischen 20A-750A. Typische zeitliche Stromänderungen betragen beispielsweise im Bereich zwischen 10-5000 A/ms, vorzugsweise 100-2000 A/ms, insbesondere 300-1500 A/ms. Als Schweißprozesse mit veränderlichem Schweißstrom werden z.B. oftmals ein Impulsschweißprozess, Kurzlichtbogenschweißprozess, Schweißprozess mit reversierender Schweißdrahtbewegung, etc. verwendet. Details dazu sind dem Fachmann bekannt. Die gegenständliche Erfindung wird nachfolgend unter Bezugnahme auf Fig.2 anhand des Impulsschweißprozesses noch näher erläutert, wobei die Erfindung aber nicht darauf beschränkt ist und auch jeder andere Schweißprozess mit zeitlich veränderlichem Schweißstrom umfasst ist.

In den Schweißgeräten A, B ist auch jeweils eine Steuereinheit 9a, 9b vorgesehen, die den jeweiligen Schweißprozess steuert und überwacht. Hierfür sind in der Steuereinheit 9a, 9b für den Schweißprozess benötigte Schweißparameter, wie beispielswiese die Schweißdrahtvorschubgeschwindigkeit, der Schweißstrom IA, IB, die Schweißspannung UA, UB, die Impulsfrequenz, die Impulsstromdauer, etc. vorgegeben oder einstellbar. Zum Steuern des Schweißprozesses ist die Steuereinheit 9a, 9b mit der Schweißstromquelle 2a, 2b verbunden. Zur Eingabe oder zur Anzeige gewisser Schweißparameter oder eines Schweißstatus kann auch eine mit der Steuereinheit 9a, 9b verbundene Benutzerschnittstelle 10a, 10b vorgesehen sein. Die beschriebenen Schweißgeräte A, B sind natürlich hinlänglich bekannt, weshalb an dieser Stelle nicht mehr näher darauf eingegangen wird.

Die beiden Schweißbrenner 4a, 4b können örtlich relativ zueinander auch so angeordnet werden, dass diese Schweißdrähte 3a, 3b in ein gemeinsames Schmelzbad am Werkstück 6 arbeiten, anstatt in zwei getrennte Schmelzbäder, wie in Fig.1 dargestellt. Diese Anordnung zueinander kann fix sein, beispielsweise in dem beide Schweißbrenner 4a, 4b an einem (nicht dargestellten) Schweißroboter angeordnet werden, der beide Schweißbrenner 4a, 4b führt. Die Anordnung kann aber auch veränderlich sein, beispielsweise in dem je ein Schweißbrenner 4a, 4b von einem Schweißroboter geführt wird. Es könnte aber auch ein gemeinsamer Schweißbrenner für beide Schweißdrähte 3a, 3b vorgesehen sein. Es ist dabei unerheblich, ob mit den Schweißbrennern 4a, 4b ein Verbindungsschweißen oder ein Auftragsschweißen, oder ein sonstiges Schweißverfahren, realisiert wird.

Wesentlich für die Erfindung ist, dass in der Schweißanordnung 1 zumindest ein Schweißgerät (hier das Schweißgerät B) vorgesehen ist, mit dem ein Schweißprozess durchgeführt wird. Das zumindest eine Schweißgerät, hier das Schweißgerät B, erfasst dabei in seinem Schweißstromkreis eine elektrische Messgröße zur Steuerung seines Schweißprozesses. Als Messgröße kann beispielsweise eine Schweißspannung UB (üblicherweise bezogen auf das Massepotential) und/oder ein Schweißstrom IB im Schweißstromkreis und/oder ein elektrischer Schweißwiderstand verwendet werden. Oftmals wird auch eine Schweißdrahtvorschubgeschwindigkeit verwendet, allerdings wird diese nicht von einer induzierten Spannung oder einem Spannungsabfall beeinflusst.

Die Messgröße kann beispielsweise von der Schweißstromquelle 2b oder von der Steuereinheit 9b des entsprechenden Schweißgeräts B erfasst werden oder auch von einer separaten (nicht dargestellten) Messeinrichtung. In einem Geräte-Stromkreis eines elektrischen Geräts EG fließt zumindest zu einem Zeitpunkt ein zeitlich veränderlicher Gerätestrom IEG, wobei im gegenständlichen Beispiel das zweite Schweißgerät A als elektrisches Gerät EG vorgesehen ist. Natürlich könnte aber z.B. auch ein (nicht dargestellter) Schweißroboter als elektrisches Gerät EG vorgesehen sein, in dessen Geräte-Stromkreis zumindest zu einem Zeitpunkt ein zeitlich veränderlicher Geräte-Strom IEG fließt. Beispielsweise könnte sich der Geräte-Strom eines Antriebsmotors eines Schweißroboters in Abhängigkeit eines bestimmten Bewegungsablaufs oder Betriebszustands des Schweißroboters so ändern, dass die erfasste Messgröße des Schweißgeräts B beeinflusst wird.

Im konkreten Beispiel ist das Schweißgerät A (als elektrisches Gerät EG) dazu vorgesehen, einen Schweißprozess mit einem zeitlich veränderlichen Schweißstrom IA durchzuführen, beispielsweise einen Impulsschweißprozess, wie nachfolgend anhand Fig.2 noch näher erläutert wird. Natürlich können aber auch beide Schweißgeräte A, B jeweils einen Schweißprozess mit einem zeitlich veränderlichen Schweißstrom IA, IB durchführen und beide Schweißgeräte A, B jeweils eine Messgröße zur Regelung des jeweiligen Schweißprozesses erfassen, z.B. jeweils eine Schweißspannung UA, UB.

Die Schweißgeräte A, B sind mittels einer Kommunikationsverbindung 11 verbunden, über die eine Synchronisationsinformation Y zwischen den Schweißgeräten A, B vorzugsweise wechselseitig ausgetauscht werden kann. Die Kommunikationsverbindung 11 kann beispielsweise eine drahtgebundene oder drahtlose Verbindung zwischen den Steuereinheiten 9a, 9b oder zwischen den Benutzerschnittstellen 10a, 10b sein. Wenn statt dem Schweißgerät A ein anderes elektrisches Gerät EG vorgesehen ist (oder ein zusätzliches), dann ist dieses andere elektrische Gerät EG mittels der Kommunikationsverbindung 11 mit dem Schweißgerät B verbunden. Beispielsweise könnte die Kommunikationsverbindung 11 zwischen der Steuereinheit 9b des Schweißgeräts B und einer Steuerungseinheit eines Schweißroboters vorgesehen sein.

Das Schweißgerät A (das den Schweißprozesses mit dem zeitlich veränderlichen Schweißstrom IA durchführt - siehe Fig.2) oder allgemein das elektrische Gerät EG sendet eine Synchronisationsinformation Y über die Kommunikationsverbindung 11 an das Schweißgerät B (das die Messgröße erfassende Schweißgerät). Das Schweißgerät A, oder die Steuereinheit 9a, hat üblicherweise natürlich Kenntnis vom durchgeführten Schweißprozess und vom zeitlichen Verlauf des Schweißstromes IA bzw. der Schweißspannung UA und weiß damit, wann sich der Schweißstrom IA oder die Schweißspannung UA ändern.

Das Schweißgerät B, insbesondere die Steuereinheit 9b verarbeitet die erhaltene Synchronisationsinformation Y, um die, zu dem Zeitpunkt des veränderlichen Geräte-Stroms IEG (hier des Schweißstroms IA) erfassten Messwerte der Messgröße zu ignorieren. Vorzugsweise enthält die Synchronisationsinformation Y dabei eine Information über eine, die Messgröße des Schweißgeräts B beeinflussende zeitliche Geräte-Stromänderung im Geräte-Stromkreis des elektrischen Geräts EG (hier des Schweißgeräts A) und das Schweißgerät B (das die Messgröße erfasst) verwendet die Synchronisationsinformation Y, um die während der, die Messgröße beeinflussenden Geräte-Stromänderung erfassten Messwerte der Messgröße zu ignorieren, wie nachfolgend noch im Detail erläutert wird.

Ignorieren kann hierbei bedeuten, dass zwar eine kontinuierliche Messung durch vom Schweißgerät B durchgeführt wird, dass aber die während der zeitlichen Geräte-Stromänderung erfassten Messwerte nicht zur Steuerung des Schweißprozesses verwendet werden. Ignorieren kann aber auch bedeuten, dass die Messwert-Erfassung durch das Schweißgerät B während der zeitlichen Geräte-Stromänderung im Geräte-Stromkreis unterbrochen wird, in diesem Zeitraum also gar keine Messwerte generiert werden. Damit können bei der Messung Zeitspannen mit möglichen Spannungs- oder Stromspitzen nicht berücksichtigt werden und folglich Fehlmessungen vermieden werden. Wenn statt dem Schweißgerät A ein anderes elektrisches Gerät EG verwendet wird, beispielsweise ein Schweißroboter, kann es unter Umständen sein, dass der zukünftige Verlauf des Geräte-Stroms IEG nicht bekannt ist. In diesem Fall könnte beispielsweise ein Schwellwert für den Geräte-Strom IEG und/oder für die Geräte-Stromänderung in einer Steuerungseinheit des elektrischen Geräts EG hinterlegt sein und die Synchronisationsinformation Y wird an das Schweißgerät B gesendet, wenn der Schwellwert bei einem Stromanstieg erreicht oder überschritten wird bzw. bei einem Stromabfall unterschritten wird.

Im einfachsten Fall ist die Synchronisationsinformation Y ein Synchronisationspuls P, der vom sendenden Schweißgerät A (oder allgemein dem elektrischen Gerät EG) über die Kommunikationsverbindung 11 an das empfangende Schweißgerät B gesendet wird. Der Synchronisationspuls P kann dabei z.B. als Strom- oder Spannungspuls auf einer drahtgebundenen Kommunikationsverbindung 11 zwischen den beiden Schweißgeräten A, B gesendet werden. Die Kommunikationsverbindung 11 könnte aber beispielsweise auch als Datenbus ausgeführt sein, auf dem Busnachrichten versendet werden. In diesem Fall kann der Synchronisationspuls P als Busnachricht gesendet werden, was sowohl drahtgebunden (Kabel, Glasfaser, etc.), als auch drahtlos (Wifi, Bluetooth, etc.) erfolgen kann.

In Fig.2 ist im oberen Bereich ein Diagramm mit Verläufen der Schweißströme IA, IB der beiden zeitgleich mit den Schweißgeräten A, B durchgeführten Schweißprozesse über die Zeit t dargestellt. Statt des Schweißgeräts A könnte aber allgemein auch ein elektrisches Gerät EG vorgesehen sein, in dessen Geräte-Stromkreis zumindest zu einem Zeitpunkt ein zeitlich veränderlicher Geräte-Strom IEG fließt, insbesondere ein Geräte-Strom IEG, der die erfasste Messgröße des Schweißgeräts B beeinflusst. Die durchgezogene Linie stellt den Verlauf des Schweißstroms IA des Schweißprozesses des Schweißgeräts A dar, die gestrichelte Linie den Verlauf des Schweißstroms IB des Schweißprozesses des Schweißgeräts B. Im mittleren Diagramm ist ein Verlauf einer Synchronisationsinformation Y über der Zeit t dargestellt, die über die Kommunikationsverbindung 11 vom Schweißgerät A an das Schweißgerät B übermittelt wird. Die Synchronisationsinformation Y wird vom Schweißgerät B verarbeitet, um die erfassten Messwerte der Messgröße zum Zeitpunkt der zumindest einen zeitlichen Geräte-Stromänderungen, hier während der Schweißstromänderung im Schweißprozess des Schweißgeräts A, zu ignorieren. Im unteren Diagramm ist die Erfassung der Schweißspannung UB als Messgröße des Schweißgeräts B über der Zeit t aufgetragen.

Daraus ist ersichtlich, dass im gezeigten Beispiel mit beiden Schweißgeräten A, B jeweils ein Schweißprozess mit einem zeitlich veränderlichen Schweißstrom IA, IB durchgeführt wird, hier insbesondere jeweils ein Impulsschweißprozess. Es wäre aber auch möglich, dass nur ein Schweißgerät, z.B. Schweißgerät A einen Schweißprozess mit einem zeitlich veränderlichen Schweißstrom IA durchführt, der die Messgröße des anderen Schweißgeräts, hier Schweißgerät B beeinflusst oder dass im Geräte-Stromkreis eines anderen elektrischen Geräts EG ein zeitlich veränderlicher Strom IEG fließt, der die Messgröße des Schweißgeräts B beeinflusst. Wie erwähnt müssen auch nicht zwei gleiche Schweißverfahren (z.B. zwei MIG/MAG-Schweißverfahren) verwendet werden, sondern es können auch zwei (oder mehr) unterschiedliche Schweißverfahren durchgeführt werden.

Während des Impulsschweißens beim MIG/MAG-Schweißen wechseln sich ein Grundstrom IG und ein demgegenüber erhöhter Impulsstrom IP periodisch mit einer vorgegebenen Impulsfrequenz f ab, wie in Fig.2 ersichtlich ist. Die Impulsfrequenz f ergibt sich als Kehrwert der Periodendauer tS eines Schweißzyklus S bestehend aus einer Impulsstromphase PP mit dem Impulsstrom IP und einer Grundstromphase PG mit dem Grundstrom IG. Vorzugsweise wird während der Impulsstromphase PP jeweils ein Schweißtropfen in das Schmelzbad abgelöst. Während einer Schweißung kann sich die Impulsfrequenz f und/oder der Wert des Grundstromes IG oder Impulsstromes IP auch ändern. Die zeitlichen Verläufe der Schweißströme IG, IP sind in Fig.2 natürlich idealisiert und vereinfacht dargestellt. Oftmals sind in der Grundstromphase PG (nicht dargestellte) kurze Zwischenstromimpulse vorgesehen, um die Prozessstabilität zu erhöhen. Das ändert aber nichts an der Periodendauer tS eines Schweißzyklus S und an der sich daraus ergebenden Impulsfrequenz f.

In Abhängigkeit vom Drahtdurchmesser und Elektrodenwerkstoff werden die Schweißdrahtvorschubgeschwindigkeit, die Schweißströme, die Grundstrom- und Pulsstromdauern und die Impulsfrequenz f vorzugsweise so aufeinander abgestimmt, dass bei jedem Stromimpuls ein Tropfen erzeugt und abgelöst wird. Schweißdrahtvorschubgeschwindigkeit und Impulsfrequenz f sind dabei in der Regel voneinander abhängig. Der Einfachheit halber sind die Verläufe der Schweißströme IA, IB in Fig.2 im Wesentlichen identisch dargestellt, mit gleich großen Grundströmen IGA=IGB und Impulsströmen IPA=IPB und lediglich um eine bestimmte Phasenverschiebung tP zeitlich voneinander beabstandet. Die Verläufe könnten sich aber natürlich auch unterscheiden, insbesondere können unterschiedliche Impulsfrequenzen fA, fB, Schweißströme oder Pulsdauern vorgesehen sein. Ebenso kann natürlich auch eine andere Phasenverschiebung, natürlich auch keine Phasenverschiebung, vorgesehen sein.

Wenn statt zweier unabhängiger Schweißprozesse mit getrennten Schmelzbädern (siehe Fig.1) beispielsweise ein Mehrfach-Impulsschweißprozess verwendet wird, bei dem beide Schweißdrähte 3a, 3b in ein gemeinsames Schmelzbad arbeiten, sind die beiden Impulsschweißprozesse vorteilhafterweise aufeinander synchronisiert. Vorzugsweise stehen dann die Impulsfrequenzen fA=1/tSA, fB=1/tSB der beiden Impulsschweißprozesse in einem bestimmten vorgegebenen Bezug zueinander und die ergebenden Schweißzyklen SA, SB haben einen bestimmten vorgegebenen Phasenbezug zueinander. Vorzugsweise gilt, dass die Impulsfrequenz fA, fB in einem ganzzahligen Verhältnis zueinander stehen.

Im mittleren Diagramm in Fig.2 ist der Verlauf einer beispielhaften Synchronisationsinformation Y über der Zeit t dargestellt, wobei die Zeit t synchron zur Zeit t des oberen Diagramms ist. Das Schweißgerät A, bzw. die Steuereinheit 9a, überwacht den Verlauf des Schweißstroms IA, um zeitliche Schweißstromänderungen $\frac{dI_A}{dt}$ festzustellen. Wenn die Steuereinheit 9a eine bestimmte (z.B. durch Schweißparameter) vorgegebene oder einstellbare Schweißstromänderungen $\frac{dI_A}{dt}$ feststellt, wird eine Synchronisationsinformation Y an das Schweißgerät B über die Kommunikationsverbindung 11 übermittelt (siehe Fig.1). Der zukünftige zeitliche Verlauf des Schweißstroms IA kann dabei der Steuereinheit 9a bekannt sein, z.B. aufgrund vorgegebener Schweißparameter eines Schweißprogramms. Die Steuereinheit 9a kennt dadurch zukünftig auftretende Schweißstromänderungen $\frac{dI_A}{dt}$ und kann eine entsprechende Synchronisationsinformation Y an die Steuereinheit 9b des Schweißgeräts B senden. Feststellen kann aber auch bedeuten, dass der zukünftige zeitliche Verlauf des Schweißstroms IA (oder allgemein des Geräte-Stroms IEG eines elektrischen Geräts EG) nicht bekannt ist und die Steuereinheit 9a die Schweißstromänderungen $\frac{dI_A}{dt}$ selbstständig aus dem zeitlichen Verlauf des Schweißstroms IA detektiert, beispielsweise aufgrund vorgegebener oder einstellbarer Schwellwerte. Im Falle eines anderen elektrischen Geräts EG übermittelt eine Steuereinheit des elektrischen Geräts EG eine Synchronisationsinformation Y an das Schweißgerät B über die Kommunikationsverbindung 11. Beispielsweise kann jede die Impulsstromphase PP begrenzende Stromflanke erkannt werden. Die Steuereinheit 9b des Schweißgeräts B verarbeitet im dargestellten Beispiel diese erhaltene Synchronisationsinformation Y, um die während der Schweißstromänderungen $\frac{dI_A}{dt}$ im Schweißprozess des Schweißgeräts A erfassten Messwerte der Messgröße zu ignorieren, wie im unteren Diagramm anhand der Schweißspannung UB als Messgröße angedeutet ist. Dadurch kann gewährleistet werden, dass falsch erfasste Messwerte der Messgröße während der Schweißstromänderungen $\frac{dI_A}{dt}$ nicht zur Steuerung oder Regelung des mit dem Schweißgerät B durchgeführten Schweißprozesses verwendet werden. Es wird damit zwar eine kontinuierliche Messung der Messgröße durchgeführt, es werden aber diejenigen Messwerte ausgeblendet bzw. ignoriert, die aufgrund der elektromagnetischen oder ohmschen Kopplung verfälscht sind. Natürlich wäre es auch möglich, dass statt dem Ignorieren der falschen Messwerte, die Erfassung der Messgröße während der Schweißstromänderungen $\frac{dI_A}{dt}$ unterbrochen wird, sodass während der Schweißstromänderungen $\frac{dI_A}{dt}$ keine Messwerte generiert werden.

Vorzugsweise enthält die gesendete Synchronisationsinformation Y eine zeitliche Information über einen Beginn und ein Ende der jeweiligen Schweißstromänderung $\frac{dI_A}{dt}$ und das Schweißgerät B, welches die Synchronisationsinformation Y erhält, ignoriert die in der Zeitspanne zwischen dem Beginn und dem Ende der Schweißstromänderung $\frac{dI_A}{dt}$ erfassten Messwerte der Messgröße (oder die Messung wird unterbrochen).

Im Beispiel in Fig.2 erkennt die Steuereinheit 9a aufgrund der Schweißstromänderung $\frac{dI_A}{dt}$ zum Zeitpunkt tA1 den Beginn des ersten Stromanstiegs von der Grundstromphase PG mit dem Grundstrom IG in die Impulsstromphase PP mit dem Impulsstrom IP und zum Zeitpunkt tE1 das entsprechende Ende des ersten Anstiegs. Analog werden zum Zeitpunkt tA2 und tE2 jeweils der Beginn und das Ende des ersten Stromabfalls detektiert, usw. Die ermittelten Zeitpunkte tA1, tE1, tA2, tE2, ...tAx, tEx werden als Synchronisationsinformation Y an das Schweißgerät B übermittelt und die Steuereinheit 9b verarbeitet diese, um die während einer Zeitspanne Δt1 zwischen dem Zeitpunkt tA1, tE1 und während einer Zeitspanne Δt2 zwischen dem Zeitpunkt tA2, tE2 erfassten Messwerte der Messgröße zu ignorieren oder die Erfassung der Messgröße zu unterbrechen, wie im unteren Diagramm durch die schraffierten Bereiche angedeutet ist.

Dabei ist die Schweißspannung UB des Schweißgeräts B als Messgröße über der Zeit t aufgetragen, wobei die Zeit t synchron zu den Diagrammen darüber ist. Es ist ersichtlich, dass die Steuereinheit 9b (oder eine entsprechende Messeinrichtung) die Messwerte der Messgröße während der Schweißstromänderung $\frac{dI_A}{dt}$ des Schweißprozesses des Schweißgeräts A ignoriert oder die Erfassung der Messgröße, hier der Schweißspannung UB, unterbricht. Im dargestellten Beispiel werden der Beginn und das Ende der Stromflanken des Schweißstroms IA (Zeitpunkte tA1, tE1; tA2, tE2) als Synchronisationsinformation Y vom Schweißgerät A an das Schweißgerät B übermittelt und das Schweißgerät B bzw. die Steuereinheit 9b ignoriert die erfassten Messwerte während der Zeitspanne Δt1 zwischen dem Zeitpunkt tA1, tE1 und während der Zeitspanne Δt2 zwischen dem Zeitpunkt tA2, tE2 (und aller weiteren Schweißstromänderung $\frac{dI_A}{dt}$). Dadurch wird gewährleistet, dass die Schweißstromänderungen $\frac{dI_A}{dt}$ des Schweißprozesses des Schweißgeräts A den Schweißprozess des Schweißgeräts B nicht nachteilig beeinflussen, die Messwerte, die während der Zeit, in der eine die Messung störende Spannung im Schweißstromkreis von Schweißgerät B induziert werden kann (schraffierte Bereiche), nicht zur Steuerung oder Regelung des Schweißprozesses des Schweißgeräts B verwendet werden. Alternativ könnte natürlich wie erwähnt die Erfassung der Messgröße, insbesondere der Schweißspannung UB ausgesetzt werden. Im dargestellten Diagramm ist die Störung der Messgröße durch eine unregelmäßige Schweißspannung UB während der Schweißstromänderungen $\frac{dI_A}{dt}$ des Schweißprozesses des Schweißgeräts A beispielhaft angedeutet (schraffierte Bereiche). In der Realität können sich natürlich auch andere Verläufe ergeben, beispielsweise ein Überschwingen des Messwerts am Beginn einer Impulsstromphase PP.

Wenn nicht beide Stromflanken (Stromanstieg, Stromabfall) einer Impulsstromphase PP des Schweißprozesses des Schweißgeräts A kritisch bzgl. einer Spannungsinduktion im Schweißstromkreis des Schweißgeräts B bzw. allgemein in dem/den jeweiligen anderen Schweißstromkreis/en sind (z.B. weil die Dauer und/oder Höhe der Schweißstromänderung nur eine vernachlässigbare Spannung induziert oder im Fall einer gemeinsamen Masseleitung 8c einen vernachlässigbaren Spannungsabfall generiert), könnte es natürlich auch ausreichen, wenn die vom Schweißgerät B erfassten Messwerte jeweils nur während der relevanten Schweißstromänderung $\frac{dI_A}{dt}$ des Schweißprozesses des Schweißgeräts A ignoriert werden oder die Messwerterfassung unterbrochen wird und nicht bei jeder auftretenden Schweißstromänderung $\frac{dI_A}{dt}$. Ob eine Schweißstromänderung $\frac{dI_A}{dt}$ relevant ist, kann beispielsweise von der Dauer und/oder der Höhe der jeweiligen Schweißstromänderung $\frac{dI_A}{dt}$ abhängig sein und beispielsweise als Schellwert in der Steuereinheit 9a hinterlegt sein.

Es müssen aber auch nicht zwingend die tatsächlichen Zeitinformationen als Synchronisationsinformation Y übermittelt werden, sondern es könnte auch ausreichen, lediglich einen Synchronisationspuls P (Strom oder Spannung) als Synchronisationsinformation Y für einen Beginn/ein Ende der zumindest einen zeitlichen Änderung des Geräte-Stroms IEG, insbesondere einer Schweißstromänderung $\frac{dI_A}{dt}$ zu übermitteln. Die Steuereinheit 9b ignoriert dann die erfassten Messwerte der Messgröße bzw. startet die Verwendung der Messwerte (hier der Schweißspannung UB) wieder, wenn sie einen Synchronisationspuls P empfängt. Denkbar wäre z.B. auch, dass in der Zeitspanne, in der die Messwerte ignoriert werden sollen bzw. die Messwerterfassung ausgesetzt werden soll, durchgehend Synchronisationspulse P vom Schweißgerät A an das Schweißgerät B gesendet werden und das Schweißgerät B die Verwendung der Messwerte bzw. die Erfassung der Messgröße erst wieder fortsetzt, wenn es keine Synchronisationspulse P mehr empfängt. Wenn ein Datenbus als Datenkommunikationsverbindung 11 vorgesehen ist, können statt Synchronisationspulsen P entsprechende Busnachrichten gesendet und empfangen werden.

Wenn mit beiden Schweißgeräten A, B zeitgleich jeweils ein Schweißprozess mit zeitlich veränderlichem Schweißstrom IA, IB durchgeführt wird, beispielsweise jeweils ein Impulsschweißprozess wie in Fig.2 angedeutet, ist es natürlich vorteilhaft, wenn beide Schweißgeräten A, B jeweils eine Synchronisationsinformation YA, YB ermitteln und über die Kommunikationsverbindung 11 wechselseitig austauschen. Dadurch kann das Schweißgerät A die Messwerte der Messgröße während Schweißstromänderungen $\frac{dI_B}{dt}$ im Schweißprozess von Schweißgerät B ignorieren oder die Messung unterbrechen und umgekehrt. Wenn mehr als zwei Schweißgeräte A, B, ...n zeitgleich verwendet werden, deren Schweißstromkreise eine elektromagnetische oder ohmsche Kopplung aufweisen, tauschen vorteilhafterweise alle betroffenen Schweißgeräte A, B, ...n wechselseitige Synchronisationsinformationen YA, YB, Yn aus.

Vorzugsweise kann das erfindungsgemäße Verfahren, z.B. über die Benutzerschnittstellen 10a, 10b von einem Benutzer aktiviert und deaktiviert werden und/oder bestimmte Parameter eingestellt werden. Denkbar wäre beispielsweise, dass ein bestimmter Schwellwert für eine Schweißstromänderung $\frac{dI}{dt}$ vorgegeben wird und erst bei Erreichen oder Überschreiten dieses Werts eine Synchronisationsinformation Y ermittelt bzw. gesendet wird und/oder dass ein Schwellenwert für die Zeitspanne Δt einstellbar ist und erst bei Erreichen oder Überschreiten dieses Werts eine Synchronisationsinformation Y ermittelt bzw. gesendet wird. Dadurch kann das Ignorieren von Messwerten oder die Unterbrechung der Erfassung der Messgröße unter Umständen unterlassen werden, wenn die Schwellenwerte nicht erreicht werden. Als Schwellwert könnten beispielsweise eine Dauer und/oder eine Höhe (z.B. Differenz zwischen Impulsstrom IP und Grundstrom IG) vorgegeben werden.

Weiters kann es vorteilhaft sein, wenn die Synchronisationsinformation Y um eine bestimmte Vorlaufzeit tv vor der entsprechenden Schweißstromänderung $\frac{dI}{dt}$ an das/die jeweils andere/anderen Schweißgerät/e gesendet wird, beispielsweise um Verzögerungen in der Datenübertragung zu kompensieren. Dadurch, dass die Schweißparameter (z.B. Impulsfrequenz f, Periodendauer tS, Dauer einer Impulsstromphase PP, Dauer einer Grundstromphase PG, etc.) eines Schweißprozesses und damit der Verlauf des Schweißstroms I in der Regel bekannt sind, sind auch die Zeitpunkte und Zeitspannen zukünftiger Schweißstromänderungen $\frac{dI_i}{dt}$ bekannt. Damit ist es möglich, die Synchronisationsinformation Y bereits um eine Vorlaufzeit tv vor der eigentlichen Schweißstromänderungen $\frac{dI}{dt}$ an das jeweilige andere Schweißgerät zu senden.

Beispielsweise könnte es dabei auch ausreichend sein, wenn nur eine erste Schweißstromänderung $\frac{dI_A}{dt}$ (hier z.B. Zeitpunkt tA1) als Synchronisationsinformation Y (z.B. als Synchronisationspuls P zum Zeitpunkt tA1) an das Schweißgerät B übermittelt wird und zusätzlich die relevanten Schweißparameter des mit dem Schweißgerät A durchgeführten Schweißprozesses an das Schweißgerät B übermittelt werden. Die Steuereinheit 9b des Schweißgeräts B kann dann daraus die Zeitpunkte und Zeitspannen aller zukünftigen Schweißstromänderung $\frac{dI_A}{dt}$ im Schweißprozess des Schweißgeräts A ermitteln und entsprechend berücksichtigen, um die Erfassung der Messgröße zu unterbrechen.

Wenn die Schweißparameter des Schweißprozesses und damit z.B. der zukünftige Verlauf des Schweißstroms IA nicht im Vorhinein bekannt sind, kann die Synchronisationsinformation Y von der Steuereinheit 9a aber auch erst unmittelbar bei einer auftretenden Schweißstromänderung $\frac{dI_A}{dt}$ übertragen werden, die von der Steuereinheit 9a erkannt wird. Dies kann beispielsweise bei einer dynamischen Lichtbogenlängenregelung der Fall sein, bei der sich die Schweißparameter ändern können, um eine bestimmte Soll-Lichtbogenlänge einzuregeln. Das gleiche gilt natürlich auch allgemein für andere elektrische Geräte EG, deren zukünftiger Verlauf des Geräte-Stroms IEG bekannt bzw. unbekannt ist.

Das Schweißverfahren gemäß der Erfindung ist insbesondere vorteilhaft, wenn als Messgröße (hier des Schweißgeräts B) eine Schweißspannung U (hier UB) verwendet wird.

Da die Schweißstromänderung $\frac{dI_A}{dt}$ im Schweißprozess von Schweißgerät A aufgrund der elektromagnetischen Kopplung der Schweißstromkreise eine Spannung im Schweißstromkreis von Schweißgerät B induziert, wirkt sich diese induzierte Spannung unmittelbar auf die gemessene Schweißspannung UB aus. Das gleiche gilt bei einer ohmschen Kopplung beider Schweißstromkreise, bei welcher sich der Spannungsabfall aufgrund der Schweißstromänderung $\frac{dI_A}{dt}$ im Schweißprozess von Schweißgerät A auf das gemeinsame elektrische Potential der beiden Schweißstromkreise auswirkt und damit unmittelbar auf die gemessene Schweißspannung UB des Schweißgeräts B, wie nachfolgend noch näher erläutert wird. Dadurch kann die, in der Regel kontinuierlich gemessene Schweißspannung UB unter Umständen verfälscht werden, was zu einem instabilen Schweißprozess am Schweißgerät B führen kann. Durch das erfindungsgemäße Schweißverfahren werden die erfassten Messwerte der Schweißspannung UB während der Spannungsinduktion bzw. während des Spannungsabfalls ignoriert oder die Erfassung der Schweißspannung UB wird unterlassen und erst danach werden die Messwerte wieder verwendet oder die Messung wieder fortgesetzt. Natürlich kann als Messgröße aber auch ein Schweißstrom I und/oder ein elektrischer Schweißwiderstand erfasst und zur Regelung des jeweiligen Schweißprozesses verwendet werden.

Wie eingangs erwähnt, kann statt getrennten Masseleitungen 8a, 8b auch eine gemeinsame Masseleitung 8c wie z.B. eine Stromschiene für die das Schweißgerät B und das Schweißgerät A (und/oder ein anderes elektrisches Gerät EG) verwendet werden. In diesem Fall beeinflussen sich die Schweißstromkreise der Schweißgeräte A, B (oder der Schweißstromkreis des Schweißgeräts B und der Geräte-Stromkreis eines anderen elektrischen Geräts EG) nicht gegenseitig elektromagnetisch. Dadurch erfolgt bei einer Geräte-Stromänderung $\frac{dI_{EG}}{dt}$ im Geräte-Stromkreis des elektrischen Geräts EG (im gezeigten Beispiel bei einer Schweißstromänderung $\frac{dI_A}{dt}$ im Schweißstromkreis des Schweißgeräts A) keine Spannungsinduktion im Schweißstromkreis des Schweißgeräts B (das den Messwert erfasst). Damit kommt es zu keiner nachteiligen Beeinflussung der Messwerterfassung bedingt durch Spannungsinduktion. Allerdings besteht in diesem Fall eine sogenannte ohmsche Kopplung der Schweißstromkreise der Schweißgeräte A, B (und/oder der Geräte-Stromkreis des elektrischen Geräts EG) über die gemeinsame Masseleitung 8c, z.B. über eine Stromschiene. Die gemeinsame Masseleitung 8c bildet dabei vereinfacht einen ohmschen Widerstand für die Schweißstromkreise bzw. den/die Geräte-Stromkreis/e aus.

Wenn nun beispielsweise im Schweißstromkreis des Schweißgeräts A (oder allgemein im Geräte-Stromkreis des elektrischen Geräts EG) ein Schweißstrom IA (oder Geräte-Strom IEG) fließt, führt dies in bekannter Weise zu einem Spannungsabfall am ohmschen Widerstand. Dieser Spannungsabfall ändert damit das gemeinsam genutzte elektrische Potential. Wenn nun das Schweißgerät B z.B. als Messgröße eine Schweißspannung UB in seinem Schweißstromkreis erfasst, kann das aufgrund der in einem anderen (Schweiß-) Stromkreis verursachten Potentialänderung unter Umständen zu einem falschen Messergebnis führen, analog wie bei der elektromagnetischen Kopplung. Es ist deshalb vorteilhaft, wenn das Schweißgerät B bei der ohmschen Kopplung in analoger Weise wie bei der elektromagnetischen Kopplung, die erfassten Messwerte der Messgröße während einer Schweißstromänderung $\dfrac{dI_A}{dt}$ im Schweißstromkreis des Schweißgeräts A (oder allgemein während einer Geräte-Stromänderung

$\dfrac{dI_{EG}}{dt}$ im Geräte-Stromkreis des elektrischen Geräts EG) ignoriert oder die Erfassung der Messgröße unterbricht.

Im gezeigten Beispiel erfolgt bei der elektromagnetischen Kopplung der Masseleitungen 8a, 8b eine Spannungsinduktion im Schweißstromkreis des Schweißgeräts B im Wesentlichen nur bei den tatsächlichen zeitlichen Schweißstromänderungen $\dfrac{dI_A}{dt}$ (Stromrampen) im Schweißstromkreis des Schweißgeräts A. Es ist deshalb ausreichend, die Messwerte nur während der tatsächlichen Schweißstromänderungen

$\dfrac{dI_A}{dt}$ zu ignorieren oder die Erfassung der Messgröße zu unterbrechen (Zeitspanne $\Delta t1$ zwischen tA1 und tE1, Zeitspanne $\Delta t2$ zwischen tA2 und tE2, usw.), wie im unteren Diagramm in Fig.2 schraffiert angedeutet ist.

Bei der ohmschen Kopplung kann es dagegen vorteilhaft sein, die Messwerte nicht nur während der

Schweißstromänderungen $\dfrac{dI_A}{dt}$ zu ignorieren oder die Messwerterfassung zu unterbrechen, sondern während der gesamten Impulsstromphase PP, also beispielsweise im Zeitraum $\Delta t3$ zwischen dem Beginn tA3 eines Stromanstiegs und dem Ende tE4 eines nachfolgenden Stromabfalls, wie im unteren Diagramm in Fig.2 schraffiert angedeutet ist.

Dies ist deshalb vorteilhaft, da der Spannungsabfall bei der ohmschen Kopplung nicht von den zeitlichen Schweißstromänderungen $\dfrac{dI_A}{dt}$ abhängt, sondern im Wesentlichen vom Absolutwert des Schweißstroms IA bzw. allgemein des Geräte-Stroms IEG. Wesentlich für den Spannungsabfall ist damit die Differenz zwischen dem Grundstrom IGA und dem Pulsstrom IPA. Vorzugsweise erfolgt die Verwendung der Messwerte der Messgröße oder die Erfassung der Messgröße, z.B. der Schweißspannung UB im Schweißstromkreis des Schweißgeräts B deshalb nur in den Grundstromphasen IG.

Gemäß einer weiteren Ausgestaltung des Verfahrens ist es vorteilhaft, wenn die vom Schweißgerät B erfasste Messgröße, insbesondere die Schweißspannung UB, zur weiteren Verwendung an ein externes Gerät übermittelt wird. Beispielsweise kann ein Schweißroboter als externes Gerät vorgesehen sein, der den Schweißbrenner 4b des Schweißgeräts B in einem bestimmten vorgegebenen Bewegungsablauf führt, um eine Schweißnaht zu erzeugen. Der Schweißroboter kann beispielsweise die erfasste Messgröße des Schweißgeräts B verwenden, um die Bewegung des Schweißbrenners 4b des Schweißgeräts B zu steuern. Dabei kann beim MIG/MAG-Schweißen beispielsweise ein Schweißnahtverfolgungsprozess in einer Steuerungseinheit des Schweißroboters implementiert sein, wie beispielsweise aus der EP 1 268 110 B2 bekannt ist.

Wenn die Steuerungseinheit des Schweißroboters z.B. die herkömmlich gemessene Schweißspannung UB des Schweißgeräts B (ohne der erfindungsgemäßen Unterbrechung der Messwerterfassung oder Ignorieren der Messwerte) als Eingangsgröße für die Regelung zur Schweißnahtverfolgung verwendet, kann dies aufgrund der (durch elektromagnetische oder ohmsche Kopplung) möglicherweise verfälschten Schweißspannung UB unter Umständen zu unerwünschten Abweichungen in der Schweißnahtverfolgung führen. Es ist deshalb vorteilhaft, wenn die entstörte Messgröße (z.B. Schweißspannung UB) an die Steuerungseinheit des Schweißroboters übermittelt wird und die Steuerungseinheit des Schweißroboters die entstörte Messgröße zur Steuerung/Regelung der Schweißnahtverfolgung verwendet, da diese die unter Umständen falschen Messwerte z.B. während den Schweißstromänderungen

$\dfrac{dI_A}{dt}$ im Schweißstromkreis des Schweißgeräts A nicht mehr enthält. Unter der entstörten Messgröße ist dabei die erfasste Messgröße ohne den Messwerten während

der relevanten Schweißstromänderungen $\dfrac{dI_A}{dt}$ zu verstehen.

Beim WIG-Schweißen kann die erfasste (und entstörte) Messgröße beispielsweise dazu weiterverwendet werden, um einen Elektrodenabstand zwischen der (nicht abschmelzenden) Elektrode des WIG-Schweißbrenners und dem Werkstück zu regeln. Darüber hinaus wäre auch denkbar, dass die erfasste Messgröße z.B. zur Qualitätssicherung verwendet wird, beispielsweise zur Analyse des mit dem Schweißgerät B durchgeführten Schweißprozesses oder zur Überwachung eines Elektrodenverschleißes, etc.

Abschließend sei darauf hingewiesen, dass die Schweißanordnung in Fig.1 und die Verläufe in Fig.2 natürlich nur beispielhafte Ausgestaltungen der Erfindung zeigen und nicht einschränkend zu verstehen sind. Es müssen beispielsweise nicht zwangsläufig zwei MIG/MAG-Schweißprozesse verwendet werden, so wie in Fig.1 dargestellt ist, sondern es könnten zwei oder mehrere beliebige Schweißgeräte mit verschiedenen Schweißprozessen (z.B. MIG/MAG, WIG, Stab-Elektroden-Schweißen) kombiniert werden. Wichtig ist einerseits, dass der zumindest eine Schweißstromkreis und der zumindest eine Geräte-Stromkreis des elektrischen Geräts EG (insbesondere ein zweiter Schweißstromkreis eines zweiten Schweißgeräts) relativ zueinander so angeordnet sind, dass sie sich zumindest abschnittsweise gegenseitig elektromagnetisch beeinflussen können und/oder dass über eine gemeinsame Masseleitung eine ohmsche Kopplung vorliegt. Weiters ist wichtig, dass in dem zumindest einen Schweißstromkreis des zumindest einen Schweißgeräts ein Schweißprozess durchgeführt wird, wobei eine Messgröße, insbesondere eine Schweißspannung erfasst wird, um den jeweiligen Schweißprozess zu regeln oder zu steuern. Im zumindest einen Geräte-Stromkreis, insbesondere Schweißstromkreis fließt zumindest zu einem Zeitpunkt ein zeitlich veränderlicher Geräte-Strom IEG bzw. zeitlich veränderlicher Schweißstrom I.

**Patentansprüche**

1. Schweißverfahren, bei dem mit zumindest einem Schweißgerät (B) ein Schweißprozess durchgeführt wird, wobei das zumindest eine Schweißgerät (B) in einem Schweißstromkreis eine elektrische Messgröße zur Steuerung des Schweißprozesses des Schweißgeräts (B) erfasst, wobei während des mit dem Schweißgerät (B) durchgeführten Schweißprozesses von zumindest einem anderen elektrischen Gerät (EG), in dem in einem Geräte-Stromkreis zumindest zu einem Zeitpunkt ein zeitlich veränderlicher Geräte-Strom (IEG) fließt, eine Synchronisationsinformation (Y) an das zumindest eine Schweißgerät (B) gesendet wird, **dadurch gekennzeichnet, dass** das zumindest eine Schweißgerät (B) die erhaltene Synchronisationsinformation (Y) dazu verwendet, um die zu dem Zeitpunkt erfassten Messwerte der Messgröße zu ignorieren.

2. Schweißverfahren nach Anspruch 1, **dadurch gekennzeichnet, dass** die Synchronisationsinformation (Y) eine Information über eine, die Messgröße des Schweißgeräts (B) beeinflussende zeitliche Geräte-Stromänderung ( $\frac{dI_{EG}}{dt}$ ) enthält und das Schweißgerät (B) die erhaltene Synchronisationsinformation (Y) verwendet, um die während der, die Messgröße beeinflussenden Geräte-Stromänderung ( $\frac{dI_{EG}}{dt}$ ) erfassten Messwerte zu ignorieren.

3. Schweißverfahren nach Anspruch 1 oder 2, **da-**

**durch gekennzeichnet, dass** als elektrisches Gerät (EG) eine elektrische Komponente eines Schweißsystems, insbesondere eine Punktschweißvorrichtung oder ein Schweißroboter verwendet wird.

4. Schweißverfahren nach einem der Ansprüche 1 bis 3, **dadurch gekennzeichnet, dass** als elektrisches Gerät (EG) ein Schweißgerät (A) verwendet wird, das einen Schweißprozess mit einem zeitlich veränderlichen Schweißstrom (IA) durchführt, wobei das Schweißgerät (A), das den Schweißprozess mit dem zeitlich veränderlichen Schweißstrom (IA) durchführt, eine Synchronisationsinformation (Y) über eine, die Messgröße des Schweißgeräts (B) beeinflussende Schweißstromänderung ( $\frac{dI_A}{dt}$ ) des durchgeführten Schweißprozesses an das Schweißgerät (B) sendet, das die Messgröße erfasst **und dass** das Schweißgerät (B), das die Messgröße erfasst, die erhaltene Synchronisationsinformation (Y) verwendet, um die während der Schweißstromänderung ( $\frac{dI_A}{dt}$ ) erfassten Messwerte der Messgröße zu ignorieren.

5. Schweißverfahren nach Anspruch 4, **dadurch gekennzeichnet, dass** mit zumindest zwei Schweißgeräten (A, B) jeweils ein Schweißprozess mit einem zeitlich veränderlichen Schweißstrom (IA, IB) durchgeführt wird, wobei jedes der zumindest zwei Schweißgeräte (A, B) jeweils eine Messgröße in seinem Schweißstromkreis erfasst, wobei die Schweißgeräte (A, B) wechselseitig eine Synchronisationsinformation (YA, YB) über, die Messgröße des jeweils anderen Schweißgeräts (A, B) beeinflussende Schweißstromänderung ( $\frac{dI_A}{dt}, \frac{dI_B}{dt}$ ) des jeweilig durchgeführten Schweißprozesses austauschen und die Schweißgeräte (A, B) die erhaltene Synchronisationsinformation (YA, YB) des jeweils zumindest einen anderen Schweißgeräts (A, B) verwenden, um die während der Schweißstromänderungen ( $\frac{dI_A}{dt}, \frac{dI_B}{dt}$ ) erfassten Messwerte der Messgröße zu ignorieren.

6. Schweißverfahren nach einem der Ansprüche 1 bis 5, **dadurch gekennzeichnet, dass** als Schweißprozess mit zeitlich veränderlichem Schweißstrom (I) ein Impulsschweißprozess, ein Kurzlichtbogenschweißprozess, ein Sprühlichtbogen-Schweißprozess oder ein Schweißprozess mit reversierendem Schweißdrahtvorschub verwendet wird.

7. Schweißverfahren nach einem der Ansprüche 1 bis 6, **dadurch gekennzeichnet, dass** die gesendete Synchronisationsinformation (Y) eine zeitliche Information über einen Beginn und ein Ende der Geräte-Stromänderung ( $\dfrac{dI_{EG}}{dt}$ ) und/oder Schweißstromänderung ( $\dfrac{dI_A}{dt}$ ) beinhaltet und dass die vom Schweißgerät (B), welches die Synchronisationsinformation (Y) erhält, zwischen dem Beginn und dem Ende der Geräte-Stromänderung ( $\dfrac{dI_{EG}}{dt}$ ) und/oder Schweißstromänderung ( $\dfrac{dI_A}{dt}$ ) erfassten Messwerte der Messgröße ignoriert werden.

8. Schweißverfahren nach einem der Ansprüche 1 bis 7, **dadurch gekennzeichnet, dass** die Synchronisationsinformation (Y) um eine bestimmte Vorlaufzeit (tv) vor der Geräte-Stromänderung ( $\dfrac{dI_{EG}}{dt}$ ) und/oder Schweißstromänderung ( $\dfrac{dI_A}{dt}$ ) gesendet wird.

9. Schweißverfahren nach einem der Ansprüche 1 bis 8, **dadurch gekennzeichnet, dass** als Messgröße eine Schweißspannung (U) und/oder ein Schweißstrom (I) und/oder ein elektrischer Schweißwiderstand erfasst werden.

10. Schweißverfahren nach einem der Ansprüche 1 bis 9, **dadurch gekennzeichnet, dass** zumindest ein Schweißgerät (B) die erfasste Messgröße zur weiteren Verwendung an ein externes Gerät übermittelt und das externe Gerät die erfasste Messgröße verwendet, um einen Prozess des externen Geräts zu steuern oder den Schweißprozess des Schweißgeräts (B) zu analysieren, wobei als externes Gerät vorzugsweise ein Schweißroboter vorgesehen wird, der einen Schweißbrenner (4b) des Schweißgeräts (B) führt, um eine Schweißnaht zu erzeugen, wobei der Schweißroboter die erhaltene Messgröße verwendet, um eine Bewegung des Schweißbrenners (4b) zu steuern.

11. Schweißanordnung (1) mit zumindest einem Schweißgerät (B) zum Durchführen eines Schweißprozesses, wobei das zumindest eine Schweißgerät (B) vorgesehen ist, in seinem Schweißstromkreis eine elektrische Messgröße zur Steuerung des Schweißprozesses zu erfassen, wobei zumindest ein anderes elektrisches Gerät (EG) vorgesehen ist, in dem in einem Geräte-Stromkreis zumindest zu einem Zeitpunkt ein zeitlich veränderlicher Geräte-Strom (IEG) fließt, wobei das zumindest eine elektrische Gerät (EG) mit dem zumindest einen Schweißgerät (B) mittels einer Kommunikationsverbindung (11) verbunden ist, wobei das zumindest eine elektrische Gerät (EG) vorgesehen ist, eine Synchronisationsinformation (Y) an das zumindest eine Schweißgerät (B) zu senden, **dadurch gekennzeichnet, dass** das zumindest eine Schweißgerät (B) die erhaltene Synchronisationsinformation (Y) dazu verwendet, um die zu dem Zeitpunkt erfassten Messwerte der Messgröße zu ignorieren.

12. Schweißanordnung (1) nach Anspruch 11, **dadurch gekennzeichnet, dass** als elektrisches Gerät eine elektrische Komponente eines Schweißsystems, insbesondere eine Punktschweißvorrichtung oder ein Schweißroboter vorgesehen ist.

13. Schweißanordnung (1) nach Anspruch 11 oder 12, **dadurch gekennzeichnet, dass** zumindest zwei Schweißgeräte (A, B) zur Durchführung jeweils eines Schweißprozess mit einem zeitlich veränderlichen Schweißstrom (IA, IB) und zur Erfassung jeweils einer Messgröße vorgesehen sind, wobei die Schweißgeräte (A, B) vorgesehen sind, wechselseitig eine Synchronisationsinformation (YA, YB) über, die Messgröße des jeweils anderen Schweißgeräts (A, B) beeinflussende zeitliche Schweißstromänderungen ( $\dfrac{dI_A}{dt}$ , $\dfrac{dI_B}{dt}$ ) im Schweißprozess der Schweißgeräte (A, B) auszutauschen und die erhaltene Synchronisationsinformation (YA, YB) des jeweils anderen Schweißgeräts (A, B) zu verarbeiten, um die während der zeitlichen Schweißstromänderung ( $\dfrac{dI_A}{dt}$ , $\dfrac{dI_B}{dt}$ ) erfassten Messwerte der Messgrößen zu ignorieren.

14. Schweißanordnung (1) nach einem der Ansprüche 11 bis 13, **dadurch gekennzeichnet, dass** zumindest ein Schweißgerät (A, B) vorgesehen ist, als Schweißprozess mit zeitlich veränderlichem Schweißstrom (I) einen Impulsschweißprozess, einen Kurzlichtbogenschweißprozess, Sprühlichtbogen-Schweißprozess oder Schweißprozess mit reversierendem Schweißdrahtvorschub durchzuführen und/oder dass als Messgröße eine Schweißspannung (U) und/oder ein Schweißstrom (I) und/oder ein elektrischer Schweißwiderstand vorgesehen ist.

15. Schweißanordnung (1) nach einem der Ansprüche 11 bis 14, **dadurch gekennzeichnet, dass** zumindest ein Schweißgerät (B) vorgesehen ist, die erfasste Messgröße zur weiteren Verwendung an ein externes Gerät zu übermitteln **und dass** das externe Gerät vorgesehen ist, die erfasste Messgröße zu verwenden, um einen Prozess des externen Geräts zu steuern und/oder den Schweißprozess des Schweißgeräts (B) zu analysieren, wobei als externes Gerät vorzugsweise ein Schweißroboter zur Führung eines Schweißbrenners (4b) des Schweißgeräts (B) zur Erzeugung einer Schweißnaht vorgesehen ist **und dass** der Schweißroboter vorgesehen ist, die erhaltene Messgröße zu verwenden, um eine Bewegung des Schweißbrenners (4b) zu steuern.

**Claims**

1. A welding method in which a welding process is carried out with at least one welding device (B), wherein the at least one welding device (B) detects an electrical measurement variable in a welding electric circuit to control the welding process of the welding device (B), wherein during the welding process carried out using the welding device (B) synchronization information is transmitted to the at least one welding device (B) from at least one other electrical device (EG) in which a device current (IEG) that changes over time flows in a device electric circuit at least at a point in time, **characterized in that** the at least one welding device (B) uses the obtained synchronization information (Y) in order to ignore the measurement values for the measurement variable detected at the point in time.

2. The welding method according to claim 1, **characterized in that** the synchronization information (Y) contains information about a change in the device current ( $\dfrac{dI_{EG}}{dt}$ ) over time which influences the measurement variable of the welding device (B) and the welding device (B) uses the synchronization information (Y) in order to ignore the measurement values detected during the change in the device current ( $\dfrac{dI_{EG}}{dt}$ ) that influences the measurement variable.

3. The welding method according to claim 1 or 2, **char-**

**acterized in that** an electrical component of a welding system, in particular a spot welding device or a welding robot, is used as the electrical device (EG).

4. The welding method according to any of the claims 1 to 3, **characterized in that** the electrical device (EG) used is a welding device (A) that carries out a welding process with a welding current (IA) that changes over time, wherein the welding device (A) that carries out the welding process with the welding current (IA) that changes over time transmits synchronization information (Y) about a change in the welding current ( $\dfrac{dI_A}{dt}$ ) of the welding process carried out that affects the measurement variable of the welding device (B) which detects the measurement variable, **and that** the welding device (B) that detects the measurement variable uses the synchronization information (Y) received in order to ignore the measurement values of the measurement variable detected during the change in the welding current ( $\dfrac{dI_A}{dt}$ ).

5. The welding method according to claim 4, **characterized in that** at least two welding devices (A, B) each carry out a welding process with a welding current (IA, IB) that changes over time, wherein each of the at least two welding devices (A, B) detects a measurement variable in its welding electric circuit, wherein the welding devices (A, B) bidirectionally exchange synchronization information (YA, YB) about the change in the welding current ( $\dfrac{dI_A}{dt}$ , $\dfrac{dI_B}{dt}$ ) of the welding process being carried out which influences the measurement variable of the other welding device (A, B), and the welding devices (A, B) use the synchronization information (YA, YB) received from the at least one other welding device (A, B) in order to ignore the measurement values of the measurement variable detected during the changes in the welding current ( $\dfrac{dI_A}{dt}$ , $\dfrac{dI_B}{dt}$ ).

6. The welding method according to any of claims 1 to 5, **characterized in that** a pulse welding process, a short arc welding process, a spray arc welding process or a welding process with reversing welding wire feed is used as the welding process with a welding current (I) that changes over time.

7. The welding method according to any of claims 1 to 6, **characterized in that** the transmitted synchronization information (Y) contains temporal information about a start and an end of the change in the device current ($\frac{dI_{EG}}{dt}$) and/or change in welding current ($\frac{dI_A}{dt}$), and that the measurement values of the measurement variable detected by the welding device (B) receiving the synchronization information (Y) between the start and the end of the change in the device current ($\frac{dI_{EG}}{dt}$) and/or the change in the welding current ($\frac{dI_A}{dt}$) are ignored.

8. The welding method according to any of claims 1 to 7, **characterized in that** the synchronization information (Y) is transmitted a certain lead time (tv) before the change in the device current ($\frac{dI_{EG}}{dt}$) and/or the change in the welding current ($\frac{dI_A}{dt}$).

9. The welding method according to any of claims 1 to 8, **characterized in that** a welding voltage (U) and/or a welding current (I) and/or an electrical welding resistance are detected as the measurement variable.

10. The welding method according to any of claims 1 to 9, **characterized in that** at least one welding device (B) transmits the detected measurement variable to an external device for further use and the external device uses the detected measurement variable to control a process of the external device or to analyze the welding process of the welding device (B), wherein a welding robot is preferably provided as the external device, which guides a welding torch (4b) of the welding device (B) in order to produce a weld seam, wherein the welding robot uses the measurement variable obtained to control a movement of the welding torch (4b).

11. A welding assembly (1) with at least one welding device (B) for carrying out a welding process, wherein the at least one welding device (B) is configured to detect an electrical measurement variable in its welding electric circuit to control the welding process, wherein at least one other electrical device (EG) is provided in which a device current (IEG) that changes over time flows in a device electric circuit at least at a point in time, wherein the at least one electrical device (EG) is connected to the at least one welding device (B) by means of a communication connection (11), wherein the at least one electrical device (EG) is configured to transmit synchronization information (Y) to the at least one welding device (B), **characterized in that** the at least one welding device (B) uses the synchronization information (Y) received to ignore the measurement values of the measurement variable detected at the point in time.

12. The welding assembly (1) according to claim 11, **characterized in that** an electrical component of a welding system, in particular a spot welding device or a welding robot, is provided as the electrical device.

13. The welding arrangement (1) according to claim 11 or 12, **characterized in that** at least two welding devices (A, B) are provided, for carrying out a welding process with a welding current (IA, IB) that changes over time and for detecting a measurement variable in each case, wherein the welding devices (A, B) are provided to alternately exchange synchronization information (YA, YB) about the changes in the welding current ($\frac{dI_A}{dt}, \frac{dI_B}{dt}$) over time in the welding process of the welding devices (A, B) and to process the received synchronization information (YA, YB) of the other welding device (A, B) in order to ignore the measurement values of the measurement variables detected during the change in the welding current over time ($\frac{dI_A}{dt}, \frac{dI_B}{dt}$).

14. The welding assembly (1) according to any of claims 11 to 13, **characterized in that** at least one welding device (A, B) is configured to carry out a pulse welding process, a short arc welding process, a spray arc welding process or a welding process with reversing welding wire feed as a welding process with a welding current (I) that changes over time and/or that a welding voltage (U) and/or a welding current (I) and/or an electrical welding resistance is provided as the measurement variable.

15. The welding assembly (1) according to any of claims 11 to 14, **characterized in that** at least one welding device (B) is configured to transmit the detected measurement variable to an external device for further use, **and that** the external device is configured to use the detected measurement variable to control a process of the external device and/or to analyze the welding process of the welding device (B), wherein the external device is preferably a welding robot for guiding a welding torch (4b) of the welding device (B) to produce a weld seam, **and that** the welding robot is provided to use the measurement variable obtained to control a movement of the welding torch (4b).

## Revendications

1. Procédé de soudage, dans lequel un processus de soudage est mis en oeuvre à l'aide d'au moins un appareil de soudage (B), ledit au moins un appareil de soudage (B) détectant, dans un circuit électrique de soudage, une grandeur de mesure électrique pour la commande du processus de soudage de l'appareil de soudage (B), dans lequel, pendant le processus de soudage mis en oeuvre à l'aide de l'appareil de soudage (B), au moins un autre appareil électrique (EG), dans lequel passe au moins à un moment donné un courant d'appareil (IEG) variable dans le temps dans un circuit électrique d'appareil, transmet une information de synchronisation (Y) audit au moins un appareil de soudage (B), **caractérisé en ce que** ledit au moins un appareil de soudage (B) utilise l'information de synchronisation (Y) obtenue pour ignorer les valeurs de mesure de la grandeur de mesure détectées à ce moment.

2. Procédé de soudage selon la revendication 1, **caractérisé en ce que** l'information de synchronisation (Y) contient une information sur une variation dans le temps du courant d'appareil ( $\frac{dI_{EG}}{dt}$ ) influençant la grandeur de mesure de l'appareil de soudage (B) et l'appareil de soudage (B) utilise l'information de synchronisation (Y) obtenue pour ignorer les valeurs de mesure détectées pendant la variation du courant d'appareil ( $\frac{dI_{EG}}{dt}$ ) influençant la grandeur de mesure.

3. Procédé de soudage selon la revendication 1 ou 2, **caractérisé en ce qu'**on utilise, comme appareil électrique (EG), un composant électrique d'un système de soudage, en particulier un dispositif de soudage par points ou un robot de soudage.

4. Procédé de soudage selon l'une quelconque des revendications 1 à 3, **caractérisé en ce qu'**on utilise, comme appareil électrique (EG), un appareil de soudage (A) qui met en oeuvre un processus de soudage à l'aide d'un courant de soudage (IA) variable dans le temps, l'appareil de soudage (A), qui met en oeuvre le processus de soudage à l'aide du courant de soudage (IA) variable dans le temps, transmettant une information de synchronisation (Y) concernant une variation du courant de soudage ( $\frac{dI_A}{dt}$ ) influençant la grandeur de mesure de l'appareil de soudage (B) du processus de soudage mis en oeuvre à l'appareil de soudage (B), qui détecte la grandeur de mesure **et en ce que** l'appareil de soudage (B), qui détecte la grandeur de mesure, utilise l'information de synchronisation (Y) obtenue pour ignorer les valeurs de mesure de la grandeur de mesure détectées pendant la variation du courant de soudage ( $\frac{dI_A}{dt}$ ).

5. Procédé de soudage selon la revendication 4, **caractérisé en ce qu'**on met en oeuvre respectivement un processus de soudage à l'aide d'au moins deux appareils de soudage (A, B) à l'aide d'un courant de soudage (IA, IB) variable dans le temps, chaque appareil desdits au moins deux appareils de soudage (A, B) détectant à chaque fois une grandeur de mesure dans son circuit électrique de soudage, les appareils de soudage (A, B) échangeant mutuellement une information de synchronisation (YA, YB) sur la variation de courant de soudage ( $\frac{dI_A}{dt}, \frac{dI_B}{dt}$ ) influençant la grandeur de mesure de l'autre appareil de soudage (A, B) respectif du processus de soudage respectif mis en oeuvre et les appareils de soudage (A, B) utilisant l'information de synchronisation (YA, YB) obtenue dudit au moins un autre appareil de soudage (A, B) respectif pour ignorer les valeurs de mesure de la grandeur de mesure détectées pendant les variations du courant de soudage ( $\frac{dI_A}{dt}, \frac{dI_B}{dt}$ ).

6. Procédé de soudage selon l'une quelconque des revendications 1 à 5, **caractérisé en ce qu'**on utilise, comme processus de soudage à l'aide d'un courant de soudage (I) variable dans le temps, un processus de soudage pulsé, un processus de soudage à arc court, un processus de soudage à arc projeté ou un processus de soudage avec mécanisme réversible d'entraînement du fil de soudure.

7. Procédé de soudage selon l'une quelconque des revendications 1 à 6, **caractérisé en ce que** l'information de synchronisation (Y) transmise comporte une information temporelle sur un début et une fin de la variation du courant d'appareil ( $\frac{dI_{EG}}{dt}$ ) et/ou de la variation du courant de soudage ( $\frac{dI_A}{dt}$ ) et **en ce que** les valeurs de mesure de la grandeur de mesure détectées par l'appareil de soudage (B), qui obtient l'information de synchronisation (Y), entre le début et la fin de la variation de courant d'appareil ( $\frac{dI_{EG}}{dt}$) et/ou de la variation du courant de soudage ( $\frac{dI_A}{dt}$ ) sont ignorées.

8. Procédé de soudage selon l'une quelconque des revendications 1 à 7, **caractérisé en ce que** l'information de synchronisation (Y) est transmise à un délai d'exécution défini (tv) avant la variation de courant d'appareil ( $\frac{dI_{EG}}{dt}$ ) et/ou la variation de courant de soudage ( $\frac{dI_A}{dt}$ ).

9. Procédé de soudage selon l'une quelconque des revendications 1 à 8, **caractérisé en ce qu'**on détecte, comme grandeur de mesure, une tension de soudage (U) et/ou un courant de soudage (I) et/ou une résistance électrique de soudage.

10. Procédé de soudage selon l'une quelconque des revendications 1 à 9, **caractérisé en ce qu'**au moins un appareil de soudage (B) transmet la grandeur de mesure détectée pour une utilisation ultérieure à un appareil externe et l'appareil externe utilise la grandeur de mesure détectée pour commander un processus de l'appareil externe ou pour analyser le processus de soudage de l'appareil de soudage (B), dans lequel un robot de soudage est de préférence prévu comme appareil externe, lequel robot guide une torche de soudage (4b) de l'appareil de soudage (B) pour générer un joint de soudure, le robot de soudage utilisant la grandeur de mesure obtenue pour commander un déplacement de la torche de soudage (4b).

11. Agencement de soudage (1) présentant au moins un appareil de soudage (B) pour mettre en oeuvre un processus de soudage, ledit au moins un appareil de soudage (B) étant conçu pour détecter, dans son circuit électrique de soudage, une grandeur de mesure électrique pour la commande du processus de soudage, au moins un autre appareil électrique (EG) étant prévu, dans lequel passe au moins à un moment donné un courant d'appareil (IEG) variable dans le temps dans un circuit électrique d'appareil, ledit au moins un appareil électrique (EG) étant relié par le biais d'une liaison de communication (11) avec ledit au moins un appareil de soudage (B), ledit au moins un appareil électrique (EG) étant conçu pour transmettre une information de synchronisation (Y) audit au moins un appareil de soudage (B), **caractérisé en ce que** ledit au moins un appareil de soudage (B) utilise l'information de synchronisation (Y) obtenue pour ignorer les valeurs de mesure de la grandeur de mesure détectées à ce moment.

12. Agencement de soudage (1) selon la revendication 11, **caractérisé en ce qu'**on utilise, comme appareil électrique, un composant électrique d'un système de soudage, en particulier un dispositif de soudage par points ou un robot de soudage.

13. Agencement de soudage (1) selon la revendication 11 ou 12, **caractérisé en ce qu'**au moins deux appareils de soudage (A, B) sont conçus pour mettre en oeuvre respectivement un processus de soudage à l'aide d'un courant de soudage (IA, IB) variable dans le temps et pour détecter à chaque fois une grandeur de mesure, les appareils de soudage (A, B) étant conçus pour échanger mutuellement une information de synchronisation (YA, YB) sur des variations dans le temps de courant de soudage ( $\frac{dI_A}{dt}, \frac{dI_B}{dt}$ ) influençant la grandeur de mesure de l'autre appareil de soudage (A, B) respectif dans le processus de soudage des appareils de soudage (A, B) et pour traiter l'information de synchronisation (YA, YB) obtenue de l'autre appareil de soudage (A, B) respectif pour ignorer les valeurs de mesure de la grandeur de mesure détectées pendant les variations dans le temps du courant de soudage ( $\frac{dI_A}{dt}, \frac{dI_B}{dt}$ ).

14. Agencement de soudage (1) selon l'une quelconque des revendications 11 à 13, **caractérisé en ce qu'**au moins un appareil de soudage (A, B) est conçu pour mettre en oeuvre, comme processus de soudage à l'aide d'un courant de soudage (I) variable dans le temps, un processus de soudage pulsé, un processus de soudage à arc court, un processus de soudage à arc projeté ou un processus de soudage avec mécanisme réversible d'entraînement du fil de soudure et/ou **en ce qu'**une tension de soudage (U) et/ou un courant de soudage (I) et/ou une résistance électrique de soudage est/sont prévu(e)(s) comme grandeur de mesure.

15. Agencement de soudage (1) selon l'une quelconque des revendications 11 à 14, **caractérisé en ce qu'**au moins un appareil de soudage (B) est conçu pour transmettre la grandeur de mesure détectée pour une utilisation ultérieure à un appareil externe et **en ce que** l'appareil externe est conçu pour utiliser la grandeur de mesure détectée pour commander un processus de l'appareil externe et/ou pour analyser le processus de soudage de l'appareil de soudage (B), dans lequel un robot de soudage est de préférence prévu comme appareil externe, lequel robot guide une torche de soudage (4b) de l'appareil de soudage (B) pour générer un joint de soudure **et en ce que** le robot de soudage est conçu pour utiliser la grandeur de mesure obtenue pour commander un déplacement de la torche de soudage (4b).

Fig. 1

EP 3 953 094 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0787555 A1
- US 2015343549 A1
- US 4322602 A
- EP 1268110 B2